(19) Europäisches Patentamt
European Patent Office
Office européen des brevets

(11) **EP 4 507 187 B1**

(12) **EUROPEAN PATENT SPECIFICATION**

(45) Date of publication and mention
of the grant of the patent:
**17.06.2026 Bulletin 2026/25**

(21) Application number: **23190035.8**

(22) Date of filing: **07.08.2023**

(51) International Patent Classification (IPC):
*H02P 6/10* (2006.01)     *H02P 21/05* (2006.01)
*B60H 1/00* (2006.01)     *B60H 1/32* (2006.01)

(52) Cooperative Patent Classification (CPC):
**H02P 6/10; B60H 1/00428; B60H 1/3222;
B60H 1/3232; H02P 21/05**

(54) **A METHOD OF OPERATING A MOTOR COUPLED TO A MECHANICAL LOAD**

VERFAHREN ZUM BETRIEB EINES AN EINE MECHANISCHE LAST GEKOPPELTEN MOTORS

PROCÉDÉ DE FONCTIONNEMENT D'UN MOTEUR COUPLÉ À UNE CHARGE MÉCANIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**12.02.2025 Bulletin 2025/07**

(73) Proprietor: **Thermo King LLC
Minneapolis, MN 55420 (US)**

(72) Inventors:
• **GORSKI, Matthias
44866 Bochum (DE)**
• **BOCK, Sebastian
45239 Essen (DE)**

(74) Representative: **Haseltine Lake Kempner LLP
One Portwall Square
Portwall Lane
Bristol BS1 6BH (GB)**

(56) References cited:
EP-A1- 2 667 501     US-A1- 2018 241 336
US-A1- 2018 309 398     US-A1- 2020 136 504

**Description**

FIELD OF THE INVENTION

The present disclosure relates to a method of operating a motor coupled to a mechanical load. The present disclosure relates further to an electric drive apparatus comprising a motor coupled to a mechanical load and a controller adapted to perform such a method and to a transport refrigeration system comprising such an electric drive apparatus.

BACKGROUND OF THE INVENTION

It is known to provide an electric drive apparatus comprising a DC bus, an inverter and an electric motor having a rotor which is coupled to a mechanical load. The electric drive apparatus may generally be configured to drive the mechanical load. The mechanical load may be, for instance, a compressor or a fan associated with a refrigeration circuit of a transport refrigeration system. The DC bus may be configured to receive power from an external power supply.

In use, an electrical power drawn from the DC bus by the electric motor may vary, e.g. as a result of variations in the mechanical load driven by the electric motor. A voltage of the DC bus may be subject to undesirable fluctuations as a result.

It is thus desirable to provide a method of controlling an electric motor and/or to provide an electric drive apparatus which is able to effectively and efficiently prevent large fluctuations in the voltage of the DC bus.

US 2018/241336 A1, which discloses the features of the preamble of claim 1, describes an inverter control unit outputting synchronous PWM signals for driving switching elements of an inverter. A frequency of the synchronous PWM signals is periodically varied when periodic pulsation occurs in a load connected to the motor. EP 2667501 A1 describes a controller configured to cause an output torque of an associated motor to contain a power-supply pulsating component. US 2018/309398 A1 describes methods for controlling a synchronous motor on the basis of a primary magnetic flux. US 2020/136504 A1 describes methods and systems for reconfigurable utility power with passive voltage boost for a transport climate control system.

BRIEF SUMMARY OF THE INVENTION

According to a first aspect, there is provided a method of operating a motor having a rotary component coupled to a mechanical load, the method comprising:

calculating a torque associated with driving of the mechanical load based on a predetermined inertia value, the speed of the rotary component and a total torque applied to the rotary component;

determining a fluctuating speed demand based on the predetermined inertia value and the torque associated with driving of the mechanical load, the fluctuating speed demand corresponding to a temporally varying component of a speed of the rotary component;

determining a rotary component speed reference value based on the fluctuating speed demand; and

controlling the motor in accordance with the rotary component speed reference value, wherein the fluctuating speed demand is determined so as to reduce variations in a total power drawn or provided by the motor in use. The present invention is defined by the independent claims. Preferred embodiments are defined by the dependent claims.

The fluctuating speed demand may be determined so as to reduce variations in a total electrical power drawn by the motor in use.

The fluctuating speed demand may correspond to a cyclically varying component of the speed of the rotary component. The speed of the rotary component may be monitored using a rotary component sensing arrangement.

It may be that controlling the motor in accordance with the rotary component speed reference value includes controlling the motor to target maintaining the speed of the rotary component at the rotary component speed reference value.

It may be that the rotary component speed reference value varies with respect to time in accordance with the fluctuating speed demand.

The predetermined inertia value may correspond to a combination of an inertia of the rotary component and an inertia the mechanical load.

It may be that the method comprises calculating the torque associated with driving of the mechanical load based on the predetermined inertia value, a rate of change of the speed of the rotary component and the total torque applied to the rotary component.

It may be that the method comprises:

calculating an inertial torque by multiplying the predetermined inertia value by the rate of change of the speed of the rotary component; and

calculating the torque associated with driving of the mechanical load by subtracting the inertial torque from the total torque applied to the rotary component.

Calculating the torque associated with driving of the mechanical load (240) may include setting the torque associated with driving of the mechanical load as being equal to a subtraction of the inertial torque from the total torque applied to the rotary component.

It may be that the method comprises determining the fluctuating speed demand by dividing a time-integral of a fluctuating component of the torque associated with driving of the mechanical load by the predetermined inertia value.

It may be that the method comprises:

determining or receiving an average speed demand corresponding to a constant component of the speed of the rotary component; and

determining the rotary component speed reference value based on the average speed demand and the fluctuating speed demand.

According to a second aspect, there is provided an electric drive apparatus comprising:

a controller adapted to perform a method in accordance with the first aspect; and

a motor having a rotary component coupled to a mechanical load.

It may be that the electric drive apparatus further comprises a power converter, wherein the motor is configured to draw an AC electrical power or a DC electrical power from the power converter in use.

It may be that the electric drive apparatus further comprises a DC bus. The power converter may be configured to receive an input DC input voltage from a power supply via the DC bus.

According to a third aspect, there is provided a transport refrigeration system comprising an electric drive apparatus in accordance with the second aspect and a vapor-compression refrigeration circuit including a compressor. The mechanical load may include the compressor.

According to a fourth aspect, there is provided a computer program comprising instructions which, when executed by the controller of an electric drive apparatus in accordance with the second aspect, cause the controller to execute a method in accordance with the first aspect.

According to a fifth aspect, there is provided a machine-readable medium having stored thereon a computer program in accordance with the fourth aspect.

BRIEF DESCRIPTION OF DRAWINGS

**FIG. 1** shows a vehicle comprising a transport refrigeration system;

**FIG. 2** is a schematic diagram of example transport refrigeration unit suitable for use with the vehicle of FIG. 1, the example transport refrigeration unit comprising a vapour-compression refrigeration circuit having a compressor;

**FIG. 3** is a schematic diagram of an example electric drive apparatus suitable for use with the transport refrigeration unit of FIG. 2;

**FIG. 4** is a flowchart which shows an example method of operating an electric motor of the electric drive apparatus of FIG. 3;

**FIG. 5** is a block diagram which shows part of the example method of FIG. 4 in detail; and

**FIG. 6** is a highly schematic diagram of a machine-readable medium having stored thereon a computer program which, when executed by a controller, causes the controller to perform the example method of FIG. 4.

DETAILED DESCRIPTION OF THE INVENTION

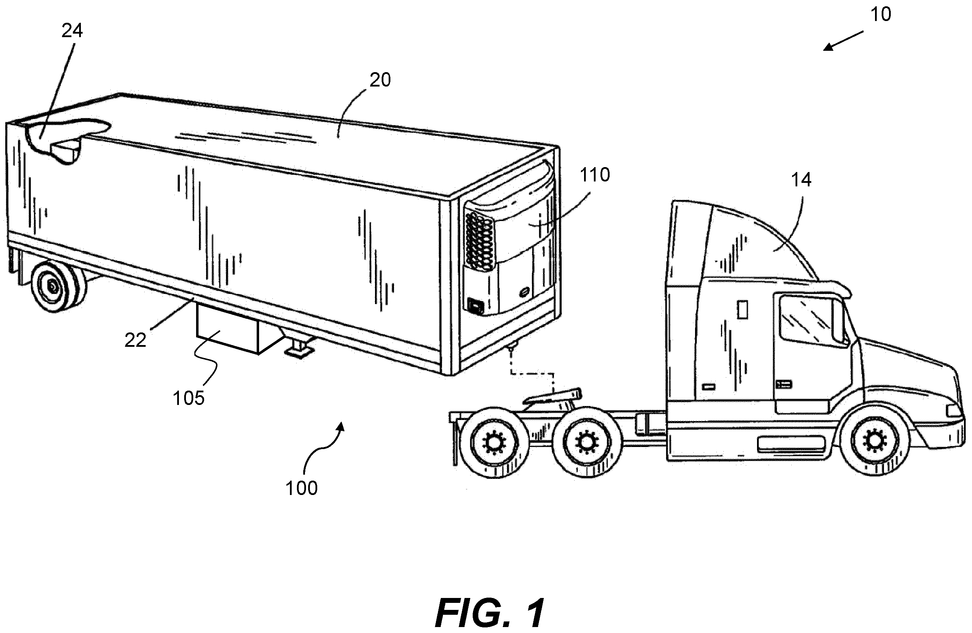

**FIG. 1** shows a vehicle 10 comprising a transport refrigeration system 20. In the example of FIG. 1, the transport refrigeration system 20 forms a part of an over-the-road refrigerated semi-trailer having a structure 22 supporting (or forming) at least one climate-controlled compartment 24 which is configured to be cooled and/or heated by a TRU 110. The climate-controlled compartment 24 can take the form of multiple compartments or have multiple zones. The structure 22 includes a chassis. The vehicle 10 comprises an electrical apparatus 100 which includes various components disposed within an under-chassis box 105. In some examples, one or more components of the electrical apparatus 100 may be integrated or incorporated into the TRU 110. The structure 22 supports the TRU 110 and the under-chassis box 105. The vehicle 10 further comprises a tractor unit 14 removably couplable to the trailer.

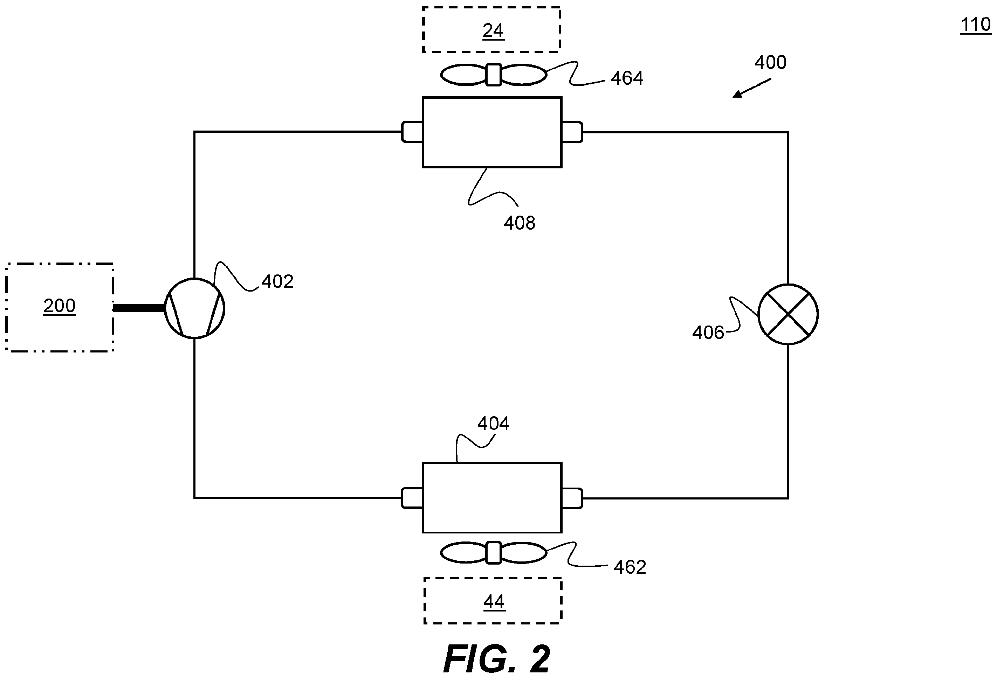

**FIG. 2** schematically shows a diagram of an example TRU 110 suitable for use within the vehicle 10 and the transport refrigeration system 20 of FIG. 1. The TRU 110 comprises a vapour-compression refrigeration circuit 400. The vapour-compression refrigeration circuit 400 includes an evaporator 408 which is configured to receive heat from the climate-controlled compartment 24 of the transport refrigeration system 20 and a condenser 404 which is configured to reject heat to a thermal sink 44 (e.g., ambient air outside of the climate-controlled compartment 24). For these purposes, the vapour-compression refrigeration circuit 400 also includes a compressor 402 and an expansion valve 406. Accordingly, the vapour-compression refrigeration circuit 400 may be controlled to cause heat to be removed from the climate-controlled compartment 24. The TRU 110 also comprises a plurality of fans 462, 464. In the example of FIG. 2, a first fan 462 is associated with (e.g. located in proximity to) the condenser 404 for improving heat transfer at one or more surfaces of the condenser 404, and a second fan 464 is associated with (e.g. located in proximity to) the evaporator 408 for improving heat transfer at one or more surfaces of the evaporator 408.

The compressor 402 is mechanically coupled to, and is therefore configured to be driven by, an electric drive apparatus 200. The electric drive apparatus 200 may be operated to drive the compressor 402 and thereby control the vapour-compression refrigeration circuit 400. The compressor 402 may be any suitable type of compressor, as will be apparent to those skilled in the art. However, in particular examples, the compressor 402 may be a reciprocating compressor (e.g., a piston compressor) or a scroll compressor.

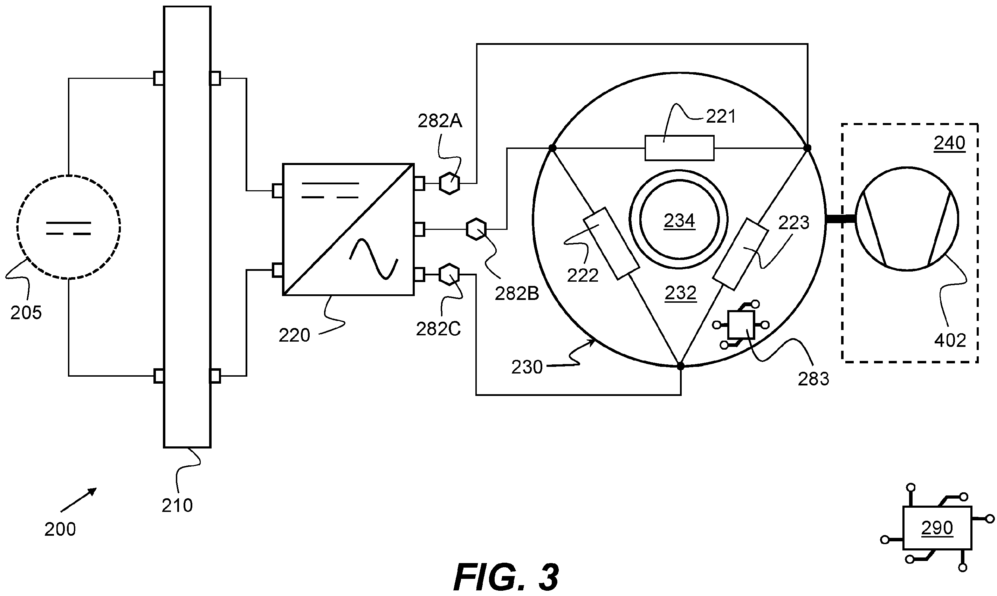

**FIG. 3** is a schematic diagram of an example electric drive apparatus 200 which is particularly, but not exclusively, suitable for use with the vapour-compression refrigeration circuit 400 of FIG. 2 and the vehicle 10/transport refrigeration system 20 of FIG. 1. The example electric drive apparatus 200 comprises a DC bus 210, an inverter system 220, an electric motor 230 (e.g., an AC electric motor 230), a plurality of current sensors 282A-282C, a rotor sensing arrangement 283 and a controller 290.

The electric motor 230 includes a rotor 234, a stator 232 and a plurality of phase windings 221-223. In the example of FIG. 3, the plurality of phase windings comprises a first phase winding 221, a second phase winding 222 and a third phase winding 223. Consequently, the electric motor 230 shown by FIG. 3 may be described as a three-phase AC electric motor 230. Also in the example of FIG. 3, each of the plurality of phase windings 221-223 is associated with (e.g., disposed on or within) the stator 232. Nevertheless, it will be appreciated that in other examples in accordance with the present disclosure, the plurality of phase windings may be comprised of any suitable number of phase windings and/or each of the plurality of phase windings may be associated with (e.g., disposed on or within) the rotor 234. In addition, in the example of FIG. 3, the phase windings 221-223 are shown as being connected in a delta configuration. However, it will be appreciated that the phase windings 221-223 may be otherwise connected, for example in a star configuration. Each phase winding 221-223 may comprise one or more coils. The rotor 234 may be referred to as a rotary component 234.

The rotor 234 is mechanically coupled to a load 240 (e.g., a mechanical load 240) and is therefore configured to drive the load 240. The load 240 is directly or indirectly driven by rotation of the rotor 234. By way of example, the load 240 may be directly mechanically coupled to the load 240 via a driveshaft. By way of further example, the load 240 may be indirectly coupled to the load 240 via a transmission comprising a gearbox. In the example electric drive apparatus 200 of FIG. 3, the load 240 is (e.g., includes) a compressor 402 (e.g., the compressor 402 of the vapour-compression refrigeration circuit 400 of FIG. 2).

The inverter system 220 is generally configured to receive an input DC voltage from the DC bus 210 and to provide a plurality of output AC voltages to the plurality of phase windings 221-223. The input DC voltage corresponds to an operating voltage of the DC bus 210. Accordingly, the electric motor 230 draws AC electrical power from the inverter system 220 in use. The inverter system 220 may comprise a plurality of switching devices, at least one inductive element and/or at least one capacitive element arranged in a suitable inverter system topology, as will be known to those skilled in the art. The inverter system 220 may also be referred to as a power converter 220. In other examples in accordance with the present disclosure, the electric motor 230 may be configured to draw DC electrical power from a DC-DC converter (e.g., a buck converter, a boost converter, a buck-boost converter or the like) which is coupled to the DC bus 210.

The DC bus 210 is configured to receive a DC supply voltage from a DC power supply 205. The DC power supply 205 may be, or be derived from, an internal power supply (e.g., a fuel-cell pack, a battery or a rectifier coupled to a generator). If so, the DC power supply 205 may be disposed within the electrical apparatus 100 of the vehicle 10 shown by FIG. 1 (e.g., within the under-chassis box 105). Otherwise, the DC power supply 205 may be, or be derived from, an external power supply (e.g. a shore power supply) which is couplable to the electrical apparatus 100 via an external connection port and appropriate cabling. In particular, the DC power supply 205 may be a rectifier which is configured to receive an AC voltage received from the shore power supply. Such a rectifier may be referred to as a grid converter.

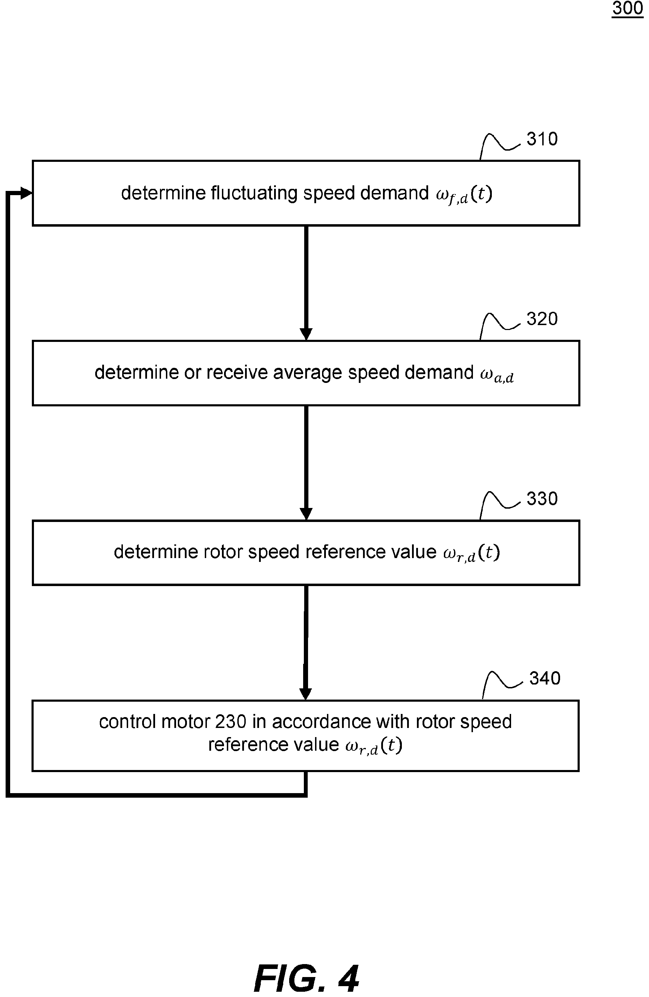

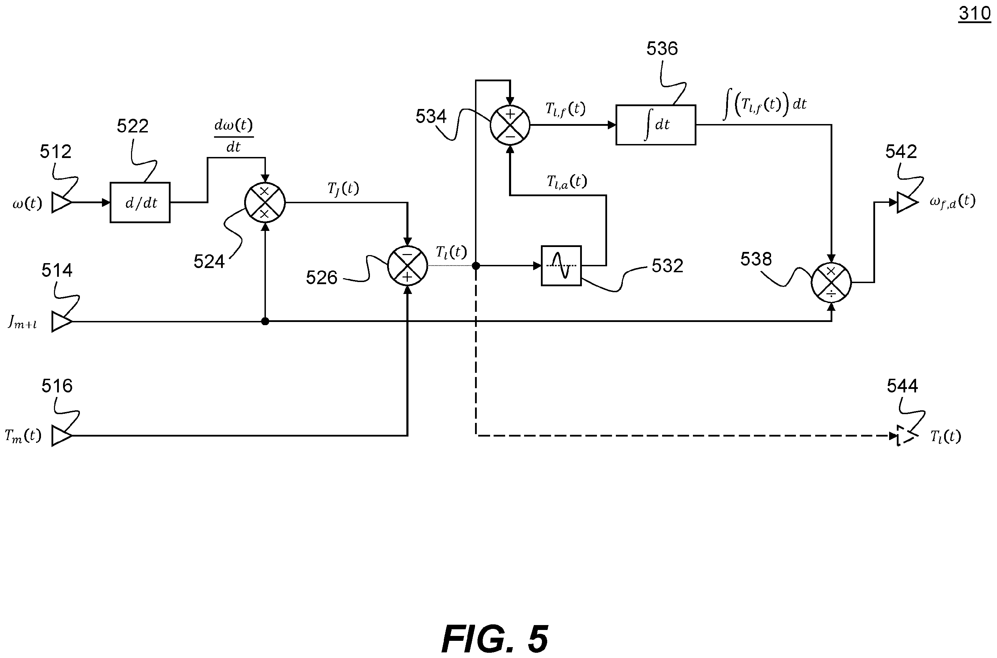

The controller 290 is generally configured to control operation of the electric drive apparatus 200. More specifically, the controller 290 is configured to operate the electric motor 230 according to a method in accordance with the example method described below with reference to FIGs. 4 and 5.

Although it has been described that the example electric drive apparatus 200 comprises an AC electric motor 230 and/or an inverter system 220, this need not necessarily be the case. By way of example, the electric motor 230 may be a DC electric motor comprising one or more windings and the electric motor 230 may be configured to receive an input DC voltage directly from the DC bus 210 for supply to the winding(s) of the electric motor 230. By way of further example, the electric motor 230 may be a DC electric motor comprising one or more windings and the electric drive apparatus 200 may also comprise a DC-DC converter. The DC-DC converter may be configured to receive an input DC voltage from the DC bus 210 and to provide one or more output DC voltage to the winding(s) of the electric motor 230.

**FIG. 4** is a flowchart which shows a method 300 of operating a motor 230 having a rotor 234 coupled to a mechanical load 240. The motor 230 may be the example motors 230 described above with reference to FIG. 3. The method 300 includes an action of determining, at block 310, a fluctuating speed demand $\omega_{d,f}(t)$ as well as an action of determining or receiving, at block 320, an average speed demand $\omega_{d,a}$. The fluctuating speed demand $\omega_{d,f}(t)$ corresponds to a temporally (e.g., cyclically) varying component of a speed of the rotor 234 whereas the average speed demand $\omega_{d,a}$ corresponds to a temporally constant component of the speed of the rotor 234. Consequently, the fluctuating speed demand $\omega_{d,f}(t)$ varies with respect to time while the average speed demand $\omega_{d,a}$ does not vary with respect to time.

The action of determining, at block 310, the fluctuating speed demand $\omega_{d,f}(t)$ is described in further detail below with reference to FIG. 5.

The average speed demand $\omega_{d,a}$ may be determined or received, at block 320, as a steady-speed setpoint for the rotor 234. If the mechanical load 240 is, or comprises, a compressor 402 as shown by FIG. 3, the average speed demand $\omega_{d,a}$ may be determined or received as a steady-speed setpoint for the rotor 234 for driving the compressor 402 at a speed which is appropriate for controlled operation of a vapour-compression circuit 400 of which the compressor 402 forms a part (e.g., the vapour-compression circuit 400 of FIG. 2). In an example, the controller 290 may determine the average speed demand $\omega_{d,a}$ based on a signal received from a dedicated controller of the TRU 110. In another example, the controller 290 may receive the average speed demand $\omega_{d,a}$ based on a signal received from a dedicated controller of the TRU 110.

The method 300 also includes an action of determining (e.g., calculating), at block 330, a rotor speed reference value $\omega_{d,r}(t)$ based on the fluctuating speed demand $\omega_{d,f}(t)$ and the average speed demand $\omega_{d,a}$ as determined or received at blocks 310 and 320, respectively. The rotor speed reference value $\omega_{d,r}(t)$ may also be referred to as a rotary component speed reference value $\omega_{d,r}(t)$. In particular, the rotor speed reference value $\omega_{d,r}(t)$ may be determined as a sum of the fluctuating speed demand $\omega_{d,f}(t)$ and the average speed demand $\omega_{d,a}$, as shown by Equation (1). It follows that the rotor speed reference value $\omega_{d,r}(t)$ varies with respect to time in accordance with the fluctuating speed demand $\omega_{d,f}(t)$.

$$\omega_{d,r}(t) = \omega_{d,f}(t) + \omega_{d,a} \tag{1}$$

The method 300 further comprises an action of controlling, at block 340, the motor 230 in accordance with the determined rotor speed reference value $\omega_{d,r}(t)$. Controlling, at block 340, the motor 230 in accordance with the rotor speed reference value $\omega_{d,r}(t)$ may generally include controlling the motor 230 to target maintaining the speed of the rotor 234 at the rotor speed reference value $\omega_{d,r}(t)$. Controlling the motor 230 to target maintaining the speed of the rotor 234 at the rotor speed reference value may be implemented by means of, for example, a proportional-integral (PI) logic, a proportional-integral-derivative (PID) logic or a feedforward logic. If so, the rotor speed reference value $\omega_{d,r}(t)$ may serve as the demand signal for such a logic, as will be appreciated by those skilled in the art.

**FIG. 5** is a block diagram which shows the action of determining the fluctuating speed demand $\omega_{d,f}(t)$ represented by block 310 in FIG. 4 in detail. Although the processes shown in FIG. 5 are expressed in the time domain, those skilled in the art will understand that various processes shown in FIG. 5 may generally be carried out in the Laplace domain (that is, the s-domain).

For the purpose of the processes shown in detail by FIG. 5, a total torque $T_m(t)$ applied to the rotor 234 is assumed to be substantially only a function of (e.g., composed of) a torque $T_l(t)$ associated with (e.g., provided for) driving of the mechanical load 240 and an inertial torque $T_f(t)$.

The total torque $T_m(t)$ applied to the rotor 234 relates to a torque applied to the rotor 234 by means of a magnetic field induced by an electric current supplied to the winding(s) 221-223 of the motor 230. Accordingly, the total torque $T_m(t)$ may be controlled by, for instance, controlling the electric current supplied to the winding(s) 221-223 of the motor 230. For the same reason, the total torque $T_m(t)$ may be determined based on the electric current supplied to the winding(s) 221-223 of the motor 230 and an appropriate motor torque coefficient (e.g., a motor torque constant). The electric current supplied to the windings(s) 221-223 of the motor 230 may be monitored using suitable current transducers, such as the current sensors 282A-282C described above with reference to FIG. 3.

The inertial torque $T_J(t)$ relates to an angular acceleration of the rotor 234. If the inertial torque has a positive sign, the rotor 234 accelerating and therefore energy is being stored in the form or rotational kinetic energy of both the rotor 234 and the mechanical load 240. Otherwise, if the inertial torque has a negative sign, the rotor 234 is decelerating and energy is being converted from the form of rotational kinetic energy of both the rotor 234 and the mechanical load 240 into the form of mechanical work (e.g., to drive of the mechanical load 240).

The inertial torque $T_J(t)$ may be calculated using Equation (2), in which $J_{m+l}$ is a predetermined inertia value and $\omega(t)$ is an actual angular speed of the rotor 234. The actual angular speed of the rotor 234 may be monitored using a suitable rotor speed transducer, such as the rotor sensing arrangement 283 described above with respect to FIG. 3. The rotor sensing arrangement 283 may be configured to directly monitor an angular position of the rotor 234 and to calculate the angular speed of the rotor as a rate of change of the angular position or the rotor 234 with respect to time $t$. The predetermined inertia value $J_{m+l}$ corresponds to a combination of (e.g., a sum of) an inertia $J_m$ of the motor 230 (that is, an inertia of the rotor 234) and an inertia $J_l$ of the mechanical load 240.

$$T_J(t) = J_{m+l} \times \frac{d\omega(t)}{dt} \qquad (2)$$

On the basis of this assumption, a torque $T_l(t)$ associated with driving of the mechanical load 240 may be calculated using Equation (3), in which the torque $T_l(t)$ associated with driving of the mechanical load 240 is set as being equal to a difference between the total torque $T_l(t)$ applied to the rotor 234 and the inertial torque $T_J(t)$. The torque $T_l(t)$ associated with driving of the mechanical load 240 may be referred to as the overall load torque $T_l(t)$.

$$T_l(t) = T_m(t) - T_J(t) \quad \therefore \quad T_l(t) = T_m(t) - J_{m+l} \times \frac{d\omega(t)}{dt} \qquad (3)$$

Equations (2) and (3) may each be evaluated using the processes shown by FIG. 5. Namely, the actual angular speed $\omega(t)$ of the rotor 234 is accepted, at block 512, as a first input, the predetermined inertia value $J_{m+l}$ is accepted, at block 514, as a second input and the total torque $T_m(t)$ applied to the rotor 234 is accepted, at block 516, as a third input. The actual angular speed $\omega(t)$ is differentiated, at block 522, to give a rate of change $d\omega(t)/dt$ of the actual angular speed of the rotor 234. The rate of change $d\omega(t)/dt$ of the actual angular speed or the rotor 234 is multiplied, at block 524, by the predetermined inertia value $J_{m+l}$ to give the inertial torque $T_J(t)$ as defined by Equation (2). The inertial torque $T_J(t)$ is then subtracted, at block 526, from the total torque $T_m(t)$ applied to the rotor 234 to give the overall load torque $T_l(t)$ as specified by Equation (3). Calculation of the overall load torque $T_l(t)$ represents a first part of the action of determining the fluctuating speed demand $\omega_{d,f}(t)$ represented by block 310 in FIGs. 4 and 5. The calculated overall load torque $T_l(t)$ may be provided, at block 544, as an output for use in other parts of a method 300 in accordance with the present disclosure and/or for other monitoring and/or control purposes in respect of the electric motor 230 and/or the electric drive apparatus 200.

A second part of the action of determining the fluctuating speed demand $\omega_{d,f}(t)$, represented by block 310, is now described with reference to each of blocks 532-538 in FIG. 5. An underlying assumption of the second part of the action of determining the fluctuating speed demand $\omega_{d,f}(t)$ is that, at any given point in time, a total electrical power $P_m$ drawn by the motor 230 is given by Equation (4), in which $P_J(t)$ is an inertial power and $P_l(t)$ is a power associated with (e.g., provided for) driving of the mechanical load 240. The total electrical power $P_m$ drawn by the motor 230 is substantially equal to a total mechanical power provided by the motor 230 (neglecting electrical losses in the motor 230), and the two may be referred to interchangeably herein. The power associated with (e.g., provided for) driving of the mechanical load 240 may be referred to as the load power $P_l(t)$, whereas the total power $P_m$ drawn or provided by the motor 230 may be referred to as the motor power $P_m$.

$$P_m = P_J(t) + P_l(t) \qquad (4)$$

In Equation (4), the load power $P_l(t)$ is denoted as being a function of time $t$. In particular, the load power $P_l(t)$ may be highly variable with respect to time due to the nature of the mechanical load 240. For instance, if the mechanical load 240 is, or comprises, a compressor 402 as shown in the example of FIG. 3, the power associated with driving of the compressor 402 (i.e., load power $P_l(t)$) may vary throughout a compression cycle of the compressor 402 due to variations in the rate of change of mechanical work done on the working fluid provided to the compression during the compression cycle. If the compressor 402 is a reciprocating compressor, the power associated with driving of the compressor 402 may vary significantly throughout the compression cycle of the compressor 402. Those skilled in the art will be aware of other types of mechanical loads which may also result in the load power $P_l(t)$ varying with respect to time.

Also, for the purposes of the second part of the action of determining the fluctuating speed demand $\omega_{d,f}(t)$, the load power $P_l(t)$ is considered to be composed of a fluctuating power component $P_{l,f}(t)$ and an average (e.g., constant) power component $P_{l,a}$, per Equation (5). Of these two components, only the fluctuating power component $P_{l,f}(t)$ is a function of time $t$.

$$P_l(t) = P_{l,f}(t) + P_{l,a} \qquad (5)$$

Likewise, the overall load torque $T_l$ is considered to be composed of a fluctuating load torque component $T_{l,f}(t)$ and an average (e.g., constant) load torque component $T_{l,a}$, per Equation (6). Again, of these components, only the fluctuating load torque component $T_{l,f}(t)$ is a function of time $t$.

$$T_l(t) = T_{l,f}(t) + T_{l,a} \qquad (6)$$

In order to enable determination of a rotor speed reference value $\omega_{d,r}(t)$ including a fluctuating speed demand $\omega_{d,f}(t)$ which at least partially eliminates (e.g., reduces) variations in total power $P_m$ drawn by the motor 230, the inertial power $P_J(t)$ is set as being equal to the fluctuating power component $P_{l,f}(t)$ per Equation (7a). That is to say that the fluctuating power component $P_{l,f}(t)$ is considered to be entirely provided by the inertial power $P_J(t)$. This means that the combined inertia of the rotor 234 and the mechanical load 240 is used as an energy store for the purpose of smoothing variations in the total power $P_m$ drawn by the motor 230.

$$P_J(t) = P_{l,f}(t) \qquad (7a)$$

By noting that rotational power is by definition equal to a product of torque and rotational speed, Equation (7a) may be written in the form of Equation (7b).

$$T_J(t) \times \omega(t) = T_{l,f}(t) \times \omega(t) \quad \therefore \quad T_J(t) = T_{l,f}(t) \qquad (7b)$$

Further, substituting Equation (2) into Equation (7b) yields Equation (7c) where $\omega_{d,r}(t)$ is the fluctuating speed demand to be appropriately determined as discussed above. In turn, Equation (7c) rearranges to give an expression for the fluctuating speed component $\omega_f(t)$, as shown by Equation (7d).

$$J_{m+l} \times \frac{d\omega_{d,r}(t)}{dt} = J_{m+l} \times \frac{d(\omega_{d,f}(t) + \omega_a)}{dt} = J_{m+l} \times \frac{d\omega_{d,f}(t)}{dt} = T_{l,f}(t) \qquad (7c)$$

$$\omega_{d,f}(t) = \frac{1}{J_{m+l}} \times \int \left( T_{l,f}(t) \right) dt \qquad (7d)$$

Since the fluctuating load torque component $T_{l,f}(t)$ is equal to a difference between the overall load torque $T_l(t)$ and the constant load torque component $T_{l,a}$, Rearrangement and reformulation of Equation (5) gives Equation (8), which may in turn be substituted into Equation (7d) to give Equation (9).

$$T_{l,f}(t) = T_l(t) - T_{l,a}(t) = T_l(t) - \overline{T_l(t)} \qquad (8)$$

Equations (7d) and (8) are each evaluated by the additional processes shown by FIG. 5. That is, the overall load torque $T_l(t)$ is averaged, at block 532, to give the constant load torque component $T_{l,a}$. The averaging of the overall load torque $T_l(t)$ at block 532 may be carried out by calculating an arithmetic mean of a bounded time-series of values of the overall load torque $T_l(t)$ received during a suitable time period preceding the current time. Other techniques for carrying out the averaging of the overall load torque $T_l(t)$ at block 532 will be apparent to those skilled in the art and may be used in accordance with the method 300. The constant load torque component $T_{l,a}$ is then subtracted, at block 534, from the overall load torque $T_l(t)$ to give the fluctuating load torque component $T_{l,f}(t)$ as defined by Equation (8). Subsequently, the fluctuating load torque component $T_{l,f}(t)$ is integrated, at block 536 to give a time-integral $\int (T_{l,f}(t)) \, dt$ of the fluctuating load torque component $T_{l,f}(t)$. The time-integral $\int (T_{l,f}(t)) \, dt$ of the fluctuating load torque component $T_{l,f}(t)$ is divided, at block 538, by the predetermined inertia value $J_{m+l}$ to produce a fluctuating speed demand $\omega_{d,f}(t)$ for at least partially reducing variations in the motor power $P_m$ (that is, the total power drawn or supplied by the motor 230, as the case may be). The fluctuating speed demand $\omega_{d,f}(t)$ is then provided, at block 542, as an output for use in the following step(s) of the method 300 (that is, in block 330).

In accordance with the method 300, energy is selectively converted into, and from, rotational kinetic energy of the rotor 234 and the mechanical load 240 to allow the motor power $P_m$ to remain substantially constant whilst the load power $P_l(t)$ varies with respect to time. The rate at which energy is to be converted into, and from, rotational kinetic energy of the rotor 234 and the mechanical load 240 therefore corresponds to the inertial power $P_J(t)$. In a previously-considered electric drive apparatus, the operating voltage of the DC bus 210 was prone to significant variations with respect to time due to variations in the motor power $P_m$ and a lack of an ability of the power supply (e.g., a grid converter) to provide a correspond variable quantity of electrical power to the DC bus. To address this issue, a relatively large electrical energy storage device (i.e., a large capacitor) was functionally provided to the DC bus 210 for the purpose of smoothing variations in the operating voltage of the DC bus 210. An electric drive apparatus 200 controlled according to the example method 300 described herein may not exhibit substantial variations in the motor power $P_m$ and therefore the operating voltage of the DC bus 210 may be generally stable without a need for a relatively large electrical energy storage device to be provided to the DC bus 210. For this reason, an electric drive apparatus 200 in accordance with the present disclosure may be lighter, less costly, and/or have a lower part count than a previously-considered electric drive apparatus.

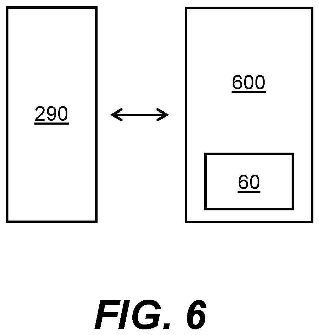

**FIG. 6** shows, highly schematically, a machine-readable medium 600 having stored thereon a computer program 60 comprising instructions which, when executed by the controller 290 provided to an electric drive apparatus in accordance with the example electric drive apparatus 200 as described above with reference to FIG. 3, cause the controller 290 to execute the method 300 described above with reference to FIGs. 4 and 5.

Except where mutually exclusive, a feature described in relation to any one of the above aspects may be applied mutatis mutandis to any other aspect. Furthermore, except where mutually exclusive, any feature described herein may be applied to any aspect and/or combined with any other feature described herein. Moreover, while the present disclosure is made with in the context of transport refrigeration systems and/or vapour-compression circuits, it will be appreciated that the present disclosure has other possible applications in other technical areas.

Further, although the method 300 has been described herein with reference to an electric motor 230 which forms a part of an electric drive apparatus 200, it should be appreciated that the principles described herein have applications which go beyond this technical application. By way of example, many of the principles described herein may be utilized for control of a motor in the form of a heat engine, such as a spark ignition (e.g., an Otto-cycle engine) engine or a compression ignition (e.g., a Diesel-cycle) engine using any necessary adaptations which will be apparent to those skilled in the art. If so, the rotor 234 may form part of, or be, a rotary component 234 of the engine (i.e., a crankshaft) and the mechanical load 240 may form part of, or be, a piston 240 of the engine. If so, a fluctuating speed demand as described herein may be determined so as to reduce variations in a total mechanical power (e.g., a brake power or a shaft power) provided by the motor 230 (i.e., the engine) via the crankshaft in use. The motor 230 may be controlled in accordance with the rotary component speed reference value $\omega_{r,d}(t)$ by means of various actuators provided to the engine 230, such as valve(s) and/or crankshaft drive means. Implementation of the method 300 in such a manner may reduce or eliminate the need for a large and/or heavy flywheel to be coupled to the crankshaft to reduce variations in a mechanical power (e.g., a brake power or a shaft power) provided by the motor 230 (i.e., the engine) in use.

## Claims

1. A method (300) of operating a motor (230) having a rotary component (234) coupled to a mechanical load (240), the method comprising:

   determining (310) fluctuating speed demand corresponding to a temporally varying component of a speed ($\omega(t)$) of the rotary component;
   determining (330) a rotary component speed reference value ($\omega_{r,d}(t)$) based on the fluctuating speed demand; and
   controlling (340) the motor in accordance with the rotary component speed reference value, wherein the fluctuating speed demand is determined so as to reduce variations in a total power drawn or provided by the motor in use
   and **characterized in that**
   the method (300) further comprises: calculating (526) a torque ($T_l(t)$) associated with driving of the mechanical load (240) based on a predetermined inertia value ($J_{m+l}$), the speed ($\omega(t)$) of the rotary component (234) and a total torque ($Tm(t)$) applied to the rotary component and wherein
   the fluctuating speed demand ($\omega_{f,d}(t)$) is determined based on the predetermined inertia value and the torque associated with driving of the mechanical load.

2. The method (300) of claim 1, wherein the rotary component speed reference value ($\omega_{r,d}(t)$) varies with respect to time in accordance with the fluctuating speed demand ($\omega_{f,d}(t)$).

3. The method (300) of claim 1 or claim 2, wherein controlling (340) the motor (320) in accordance with the rotary component speed reference value ($\omega_{r,d}(t)$) includes controlling the motor to target maintaining the speed of the rotary component (234) at the rotary component speed reference value.

4. The method (300) of any preceding claim, wherein the predetermined inertia value ($J_{m+l}$) corresponds to a combination of an inertia of the rotary component (234) and an inertia the mechanical load (240).

5. The method (300) of any preceding claim, comprising:
calculating (526) the torque ($T_l(t)$) associated with driving of the mechanical load (240) based on the predetermined inertia value ($J_{m+l}$), a rate of change ($d\omega(t)/dt$) of the speed of the rotary component (234) and the total torque ($T_m(t)$) applied to the rotary component.

6. The method (300) of any of claim 5, comprising:

calculating (524) an inertial torque ($T_J(t)$) by multiplying the predetermined inertia value ($J_{m+l}$) by the rate of change ($d\omega(t)/dt$) of the speed of the rotary component (234); and
calculating (526) the torque ($T_l(t)$) associated with driving of the mechanical load (240) by subtracting the inertial torque from the total torque applied to the rotary component.

7. The method (300) of claim 6, wherein calculating (526) the torque ($T_l(t)$) associated with driving of the mechanical load (240) includes setting the torque associated with driving of the mechanical load as being equal to a subtraction of the inertial torque ($T_J(t)$) from the total torque ($T_m(t)$) applied to the rotary component (234).

8. The method (300) of any preceding claim, comprising:
determining (310) the fluctuating speed demand by dividing (538) a time-integral (536) of a fluctuating component ($T_{l,f}(t)$) of the torque ($T_l(t)$) associated with driving of the mechanical load (240) by the predetermined inertia value ($J_{m+l}$).

9. The method (300) of any preceding claim, comprising:

determining or receiving (320) an average speed demand ($\omega_{r,d}(t)$) corresponding to a constant component of the speed ($\omega(t)$) of the rotary component (234); and
determining (330) the rotary component speed reference value ($\omega_{r,d}(t)$) based on the average speed demand and the fluctuating speed demand ($\omega_{f,d}(t)$).

10. An electric drive apparatus (200) comprising:

a controller (290) adapted to perform the method (300) of any preceding claim; and
a motor (230) having a rotary component (234) coupled to a mechanical load (240).

11. The electric drive apparatus (200) of claim 10, further comprising a power converter (220), wherein the motor (230) is configured to draw an AC electrical power or a DC electrical power from the power converter in use.

12. The electric drive apparatus (200) of claim 11, further comprising a DC bus (210), wherein the power converter (220) is configured to receive an input DC input voltage from a power supply (205) via the DC bus.

13. A transport refrigeration system (20) comprising the electric drive apparatus (200) of any of claims 10-12 and a vapor-compression refrigeration circuit (400) including a compressor (402), wherein the mechanical load (240) includes the compressor.

14. A computer program (60) comprising instructions which, when executed by the controller (290) of the electric drive apparatus (200) of any of claims 10-12, cause the controller to execute the method (300) of any of claims 1-9.

15. A machine-readable medium (600) having stored thereon the computer program (60) of claim 14.

**Patentansprüche**

1. Verfahren (300) zum Betreiben eines Motors (230), der ein Drehbauteil (234) aufweist, das an eine mechanische Last (240) gekoppelt ist, wobei das Verfahren Folgendes umfasst:

Bestimmen (310) einer schwankenden Drehzahlanforderung, die einem zeitlich variierenden Bauteil einer Drehzahl ($\omega(t)$) des Drehbauteils entspricht;

Bestimmen (330) eines Drehbauteildrehzahlsollwerts ($\omega_{r,d}(t)$) basierend auf der schwankenden Drehzahlanforderung; und

Steuern (340) des Motors gemäß dem Drehbauteildrehzahlsollwert, wobei

die schwankende Drehzahlanforderung so bestimmt wird, dass Variationen in einer durch den Motor bei Verwendung aufgenommenen oder bereitgestellten Gesamtleistung verringert werden, und **dadurch gekennzeichnet, dass**

das Verfahren (300) ferner Folgendes umfasst: Berechnen (526) eines mit einem Antrieb der mechanischen Last (240) verknüpften Drehmoments ($T_l(t)$) basierend auf einem vorbestimmten Trägheitswert ($J_{m+1}$), der Drehzahl ($\omega(t)$) des Drehbauteils (234) und einem auf das Drehbauteil angewandten Gesamtdrehmoment ($Tm(t)$) und wobei

die schwankende Drehzahlanforderung ($\omega_{f,d}(t)$) basierend auf dem vorbestimmten Trägheitswert und dem mit dem Antrieb der mechanischen Last verknüpften Drehmoment bestimmt wird.

2. Verfahren (300) nach Anspruch 1, wobei der Drehbauteildrehzahlsollwert ($\omega_{r,d}(t)$) gemäß der schwankenden Drehzahlanforderung ($\omega_{f,d}(t)$) in Bezug auf Zeit variiert.

3. Verfahren (300) nach Anspruch 1 oder 2, wobei das Steuern (340) des Motors (320) gemäß dem Drehbauteildrehzahlsollwert ($\omega_{r,d}(t)$) ein Steuern des Motors, um ein Halten der Drehzahl des Drehbauteils (234) auf dem Drehbauteildrehzahlsollwert anzuzielen, einschließt.

4. Verfahren (300) nach einem der vorhergehenden Ansprüche, wobei der vorbestimmte Trägheitswert ($J_{m+l}$) einer Kombination aus einer Trägheit des Drehbauteils (234) und einer Trägheit der mechanischen Last (240) entspricht.

5. Verfahren (300) nach einem der vorhergehenden Ansprüche, umfassend:
Berechnen (526) des mit dem Antrieb der mechanischen Last (240) verknüpften Drehmoments ($T_l(t)$) basierend auf dem vorbestimmten Trägheitswert ($J_{m+l}$), einer Änderungsrate ($d\omega(t)/dt$) der Drehzahl des Drehbauteils (234) und dem auf das Drehbauteil angewandte Gesamtdrehmoment ($T_m(t)$).

6. Verfahren (300) nach einem des Anspruchs 5, umfassend:

Berechnen (524) eines Trägheitsdrehmoments ($T_J(t)$) durch Multiplizieren des vorbestimmten Trägheitswerts ($J_{m+l}$) mit der Änderungsrate ($d\omega(t)/dt$) der Drehzahl des Drehbauteils (234); und
Berechnen (526) des mit dem Antrieb der mechanischen Last (240) verknüpften Drehmoments ($T_l(t)$) durch Subtrahieren des Trägheitsdrehmoments von dem auf das Drehbauteil angewandten Gesamtdrehmoment.

7. Verfahren (300) nach Anspruch 6, wobei das Berechnen (526) des mit dem Antrieb der mechanischen Last (240) verknüpften Drehmoments ($T_l(t)$) ein Festlegen des mit dem Antrieb der mechanischen Last verknüpften Drehmoments als gleich einer Subtraktion des Trägheitsdrehmoments ($T_J(t)$) von dem auf das Drehbauteil (234) angewandte Gesamtdrehmoment ($T_m(t)$) einschließt.

8. Verfahren (300) nach einem der vorhergehenden Ansprüche, umfassend:
Bestimmen (310) der schwankenden Drehzahlanforderung durch Dividieren (538) eines Zeitintegrals (536) eines schwankenden Bauteils ($T_{l,f}(t)$) des mit dem Antrieb der mechanischen Last (240) verknüpften Drehmoments ($T_l(t)$) durch den vorbestimmten Trägheitswert ($J_{m+l}$).

9. Verfahren (300) nach einem der vorhergehenden Ansprüche, umfassend:

Bestimmen oder Empfangen (320) einer durchschnittlichen Drehzahlanforderung ($\omega_{a,d}(t)$), die einem konstanten Bauteil der Drehzahl ($\omega(t)$) des Drehbauteils (234) entspricht; und
Bestimmen (330) des Drehbauteildrehzahlsollwerts ($\omega_{r,d}(t)$) basierend auf der durchschnittlichen Drehzahlanforderung und der schwankenden Drehzahlanforderung ($\omega_{f,d}(t)$).

10. Elektrische Antriebsvorrichtung (200), umfassend:
eine Steuerung (290), die dazu ausgelegt ist, das Verfahren (300) nach einem der vorhergehenden Ansprüche durchzuführen; und einen Motor (230), der ein Drehbauteil (234) aufweist, das an eine mechanische Last (240) gekoppelt ist.

11. Elektrische Antriebsvorrichtung (200) nach Anspruch 10, ferner umfassend einen Leistungswandler (220), wobei der Motor (230) dazu konfiguriert ist, bei Verwendung eine elektrische Wechselstromleistung oder eine elektrische Gleichstromleistung aus dem Leistungswandler zu beziehen.

12. Elektrische Antriebsvorrichtung (200) nach Anspruch 11, ferner umfassend einen Gleichstrombus (210), wobei der Leistungswandler (220) dazu konfiguriert ist, über den Gleichstrombus eine Gleichstromeingangsspannung von einer Leistungsversorgung (205) zu empfangen.

13. Transportkühlsystem (20), umfassend die elektrische Antriebsvorrichtung (200) nach einem der Ansprüche 10 bis 12 und einen Dampfkompressionskühlkreislauf (400) einschließlich eines Kompressors (402), wobei die mechanische Last (240) den Kompressor einschließt.

14. Computerprogramm (60), umfassend Anweisungen, die, wenn sie durch die Steuerung (290) der elektrischen Antriebsvorrichtung (200) nach einem der Ansprüche 10 bis 12 ausgeführt werden, die Steuerung dazu veranlassen, das Verfahren (300) nach einem der Ansprüche 1 bis 9 auszuführen.

15. Maschinenlesbares Medium (600), das das darauf gespeicherte Computerprogramm (60) nach Anspruch 14 aufweist.

**Revendications**

1. Procédé (300) d'exploitation d'un moteur (230) ayant un composant rotatif (234) couplé à une charge mécanique (240), le procédé comprenant les étapes consistant à :

   déterminer (310) une demande de vitesse fluctuante correspondant à une composante variant temporellement d'une vitesse ($\omega(t)$) du composant rotatif ;
   déterminer (330) une valeur de référence de vitesse du composant rotatif ($\omega_{r,d}(t)$) sur la base de la demande de vitesse fluctuante ; et
   commander (340) le moteur conformément à la valeur de référence de vitesse du composant rotatif, dans lequel la demande de vitesse fluctuante est déterminée de manière à réduire des variations d'une puissance totale prélevée ou fournie par le moteur en utilisation et **caractérisé en ce que**
   le procédé (300) comprend en outre l'étape consistant à : calculer (526) un couple ($T_l(t)$) associé à l'entraînement de la charge mécanique (240) sur la base d'une valeur d'inertie prédéterminée ($J_{m+l}$), de la vitesse ($\omega(t)$) du composant rotatif (234) et d'un couple total ($Tm(t)$) appliqué au composant rotatif et dans lequel
   la demande de vitesse fluctuante ($\omega_{f,d}(t)$) est déterminée sur la base de la valeur d'inertie prédéterminée et du couple associé à l'entraînement de la charge mécanique.

2. Procédé (300) selon la revendication 1, dans lequel la valeur de référence de vitesse du composant rotatif ($\omega_{r,d}(t)$) varie par rapport au temps conformément à la demande de vitesse fluctuante ($\omega_{f,d}(t)$).

3. Procédé (300) selon la revendication 1 ou la revendication 2, dans lequel commander (340) le moteur (320) conformément à la valeur de référence de vitesse du composant rotatif ($\omega_{r,d}(t)$) inclut commander le moteur pour viser le maintien de la vitesse du composant rotatif (234) à la valeur de référence de vitesse du composant rotatif.

4. Procédé (300) selon l'une quelconque des revendications précédentes, dans lequel la valeur d'inertie prédéterminée ($J_{m+l}$) correspond à une combinaison d'une inertie du composant rotatif (234) et d'une inertie de la charge mécanique (240).

5. Procédé (300) selon l'une quelconque des revendications précédentes, comprenant les étapes consistant à :
   calculer (526) le couple ($T_l(t)$) associé à l'entraînement de la charge mécanique (240) sur la base de la valeur d'inertie prédéterminée ($J_{m+l}$), d'un taux de variation ($d\omega(t)/dt$) de la vitesse du composant rotatif (234) et du couple total ($T_m(t)$) appliqué au composant rotatif.

6. Procédé (300) selon la revendication 5, comprenant les étapes consistant à :

   calculer (524) un couple inertiel ($T_J(t)$) en multipliant la valeur d'inertie prédéterminée ($J_{m+l}$) par le taux de variation ($d\omega(t)/dt$) de la vitesse du composant rotatif (234) ; et
   calculer (526) le couple ($T_l(t)$) associé à l'entraînement de la charge mécanique (240) en soustrayant le couple inertiel du couple total appliqué au composant rotatif.

7. Procédé (300) selon la revendication 6, dans lequel calculer (526) le couple ($T_l(t)$) associé à l'entraînement de la charge mécanique (240) inclut définir le couple associé à l'entraînement de la charge mécanique comme étant égal à une soustraction du couple inertiel ($T_J(t)$) du couple total ($T_m(t)$) appliqué au composant rotatif (234).

8. Procédé (300) selon l'une quelconque des revendications précédentes, comprenant les étapes consistant à : déterminer (310) la demande de vitesse fluctuante en divisant (538) une intégrale temporelle (536) d'une composante fluctuante ($T_{l,f}(t)$) du couple ($T_l(t)$) associé à l'entraînement de la charge mécanique (240) par la valeur d'inertie prédéterminée ($J_{m+l}$).

9. Procédé (300) selon l'une quelconque des revendications précédentes, comprenant les étapes consistant à :

   déterminer ou recevoir (320) une demande de vitesse moyenne ($\omega_{a,d}(t)$) correspondant à une composante constante de la vitesse ($\omega(t)$) du composant rotatif (234) ; et
   déterminer (330) la valeur de référence de vitesse du composant rotatif ($\omega_{r,d}(t)$) sur la base de la demande de vitesse moyenne et de la demande de vitesse fluctuante ($\omega_{f,d}(t)$).

10. Appareil d'entraînement électrique (200) comprenant :

    un contrôleur (290) adapté pour mettre en œuvre le procédé (300) selon l'une quelconque des revendications précédentes ; et
    un moteur (230) ayant un composant rotatif (234) couplé à une charge mécanique (240).

11. Appareil d'entraînement électrique (200) selon la revendication 10, comprenant en outre un convertisseur de puissance (220), dans lequel le moteur (230) est configuré pour prélever une puissance électrique CA ou une puissance électrique CC du convertisseur de puissance en utilisation.

12. Appareil d'entraînement électrique (200) selon la revendication 11, comprenant en outre un bus CC (210), dans lequel le convertisseur de puissance (220) est configuré pour recevoir une tension d'entrée CC d'entrée d'une alimentation électrique (205) via le bus CC.

13. Système de réfrigération de transport (20) comprenant l'appareil d'entraînement électrique (200) selon l'une quelconque des revendications 10-12 et un circuit frigorifique à compression de vapeur (400) incluant un compresseur (402), dans lequel la charge mécanique (240) inclut le compresseur.

14. Programme informatique (60) comprenant des instructions qui, lorsqu'elles sont exécutées par le contrôleur (290) de l'appareil d'entraînement électrique (200) selon l'une quelconque des revendications 10-12, amènent le contrôleur à exécuter le procédé (300) selon l'une quelconque des revendications 1-9.

15. Support lisible par machine (600) sur lequel est stocké le programme d'ordinateur (60) selon la revendication 14.

FIG. 1

**FIG. 2**

EP 4 507 187 B1

**FIG. 3**

EP 4 507 187 B1

<u>300</u>

```
                                                    ⌒⌒ 310
┌─────────────────────────────────────────────────────────┐
│                                                         │
│   determine fluctuating speed demand ω_{f,d}(t)         │
│                                                         │
└─────────────────────────────────────────────────────────┘
                            │
                            │
                            ▼                       ⌒⌒ 320
┌─────────────────────────────────────────────────────────┐
│                                                         │
│   determine or receive average speed demand ω_{a,d}     │
│                                                         │
└─────────────────────────────────────────────────────────┘
                            │
                            │
                            ▼                       ⌒⌒ 330
┌─────────────────────────────────────────────────────────┐
│                                                         │
│   determine rotor speed reference value ω_{r,d}(t)      │
│                                                         │
└─────────────────────────────────────────────────────────┘
                            │
                            │
                            ▼                       ⌒⌒ 340
┌─────────────────────────────────────────────────────────┐
│                                                         │
│   control motor 230 in accordance with rotor speed      │
│        reference value ω_{r,d}(t)                       │
│                                                         │
└─────────────────────────────────────────────────────────┘
```

## FIG. 4

**FIG. 5**

290 ⟷ 600

60

# FIG. 6

**EP 4 507 187 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018241336 A1
- EP 2667501 A1
- US 2018309398 A1
- US 2020136504 A1